# EUROPÄISCHE PATENTSCHRIFT

(11) **EP 1 108 605 B1**
(45) Veröffentlichungstag und Bekanntmachung des Hinweises auf die Patenterteilung: **07.08.2002**
(21) Anmeldenummer: 99122803.2
(22) Anmeldetag: 17.11.1999
(51) Int. Cl.: B60K 41/22, F16H 61/16

(54) **Verfahren zur Fahrtrichtungsbestimmung in Getriebeneutralstellung**
Process for the determination of a vehicle driving direction while the transmission is in neutral
Procédé pour établir la direction lorsqu'une boîte de vitesses est en position neutre

(43) Veröffentlichungstag der Anmeldung: 20.06.2001
(73) Patentinhaber: Ford Global Technologies, Inc., A subsidiary of Ford Motor Company, Dearborn, Michigan 48126 (US)
(72) Erfinder: Quast, Jörg-Rainer, 50858 Köln (DE)
(74) Vertreter: Drömer, Hans-Carsten, Dipl.-Ing.

(56) Entgegenhaltungen:
- EP-A- 0 635 390
- DE-A- 19 625 967
- US-A- 4 475 637
- US-A- 4 768 636

## Beschreibung

Die Erfindung bezieht sich auf ein Verfahren zur Bestimmung der Fahrtrichtung in Getriebeneutralstellung für ein automatisiertes Handschaltgetriebe in einem Kraftfahrzeug gemäss dem Oberbegriff des Anspruches 1.

Eine zulässige Betriebsart für automatische Handschaltgetriebe ist Rollen in Getriebeneutralstellung. Schaltet der Fahrer während des Rollens von Neutral nach Vorwärts oder Rückwärts, benötigt die Getriebesteuerung die Fahrtrichtungsinformation, um entscheiden zu können, ob die gewählte Betriebsstufe zulässig oder nicht zulässig ist. Zur Beschaffung dieser Fahrtrichtungsinformation bietet sich als naheliegendste Lösung an, einen Drehzahlsensor mit Fahrtrichtungserkennung zu benutzen. Solche Sensoren sind jedoch wesentlich aufwendiger als die in einem automatisierten Handschaltgetriebe vorhandenen Drehzahlsensoren an Eingangs- und Ausgangswelle.

Eine weitere Möglichkeit der Fahrtrichtungsbestimmung besteht darin, dass entsprechend der Fahrtrichtungsauswahl ein Gang eingelegt und dann die Kupplung kurzzeitig in Eingriff gebracht wird. Aus dem Verlauf der Motordrehzahl kann, wenn diese sehr stark absinkt, eine Rollrichtung entgegen der gewählten Fahrtrichtung erkannt werden. Als Nachteil ist zu sehen, dass dieses Verfahren die Kupplung sehr stark belastet und so zu einem unnötigen Verschleiss führt. Weiterhin besteht die Gefahr, den Motor unerwünscht abzuwürgen.

In der DE 196 25 967 ist ein System zur Steuerung einer Servo-Kupplung beschrieben. Aufgabe des Systems ist es, mittels der Servo-Kupplung wenigstens zwei rotierende Getriebeteile in einen ineinandergreifenden Zustand zu bringen. Es wird zwar keine Aussage über die Rollrichtung getroffen, es wird aber gezeigt, wie mittels einer automatischen Betätigung der Kupplung, unabhängig vom Zutun des Fahrers, Informationen über den Betriebszustand des Getriebes gewonnen werden können.

Das Dokument EP 0 635 390 A1 offenbart ein Verfahren gemäß der Oberbegriff des Anspruchs 1.

Aufgabe der Erfindung ist es daher, ein Verfahren zu entwickeln, das die Bestimmung der Fahrtrichtung in einem automatisierten Handschaltgetriebe in Getriebeneutralstellung ermöglicht ohne zusätzlichen Aufwand an Sensoren und ohne übermässigen Verschleiss der Kupplung.

Diese Aufgabe wird erfindungsgemäss dadurch gelöst, dass folgende Verfahrensschritte ausgeführt werden:
- Die Kupplung wird kurz geschlossen und wieder geöffnet, wodurch die Getriebeeingangswelle in Motordrehrichtung dreht und etwa auf die Motordrehzahl beschleunigt;
- anschließend wird ein Vorwärtsgang synchronisiert, wodurch die Getriebeeingangswelle etwa auf eine Drehzahl, die sich aus dem entsprechenden Übersetzungsverhältnis des synchronisierten Ganges und der Ausgangsdrehzahl ergibt, beschleunigt und die sich ergebende Drehrichtung bei Vorwärtsfahrt gleich und bei Rückwärtsfahrt entgegengesetzt der Motordrehrichtung ist;
- während des Synchronisierens wird der Drehzahlverlauf der Getriebeeingangswelle dahingehend untersucht, ob ein Nulldurchgang stattfindet, wenn nein, ist die Fahrtrichtung vorwärts, wenn ja, ist die Fahrtrichtung rückwärts.

Eine vorteilhafte Ausgestaltung der Erfindung sieht vor, die ermittelte Fahrtrichtung in der Steuereinheit als Fahrtrichtungsmodus "vorwärts" oder "rückwärts" zu speichern, wobei ein zusätzlicher Fahrtrichtungsmodus "unbekannt" gespeichert werden kann. Nur wenn der Fahrtrichtungsmodus "unbekannt" ist, soll obiges Verfahren ablaufen. Die Fahrtrichtung gilt als grundsätzlich bekannt, wenn aus Vorwärts oder Rückwärts in neutral geschaltet wird und die Fahrgeschwindigkeit eine mittels der vorhandenen Drehzahlsensoren gerade noch meßbare Mindestgeschwindigkeit bzw. -drehzahl nicht unterschreitet. Der Fahrtrichtungsmodus ist "unbekannt", wenn in Getriebeneutralstellung die Drehzahl der Getriebeausgangswelle zu einem beliebigen Zeitpunkt kleiner der meßbaren Mindestdrehzahl war oder ist. Ebenso gilt er als unbekannt direkt nach dem Einschalten der Zündung.

Wenn in Getriebeneutralstellung der Fahrtrichtungsmodus "unbekannt" ist, kann die Bestimmung der Fahrtrichtung mittels obigem Verfahren zum Zeitpunkt einer manuellen Schaltauswahl des Getriebes Vorwärts oder Rückwärts erfolgen. Die Bestimmung erfolgt nur dann, wenn eine Umkehrgeschwindigkeit bzw. -drehzahl an der Getriebeausgangswelle überschritten wird. Die Umkehrgeschwindigkeit ist die Fahrgeschwindigkeit, bei der noch ein Gang entgegengesetzt der Fahrtrichtung geschaltet werden kann. Die andere Möglichkeit ist, die Bestimmung der Fahrtrichtung immer zum Zeitpunkt des Überschreitens der Umkehrdrehzahl der Getriebeausgangswelle durchzuführen. Vorteil ist hier, dass die Information des Fahrtrichtungsmodus immer vorliegt, so dass keine Verzögerung durch die Fahrtrichtungsbestimmung beim Schalten von Neutral nach Vorwärts oder Rückwärts auftritt.

Bei der vorteilhaften Ausgestaltung des erfindungsgemässen Verfahrens wird ein Vorwärtsgang zur Synchronisierung verwendet. Dies ist erforderlich wegen der hohen erreichbaren Rollgeschwindigkeiten bei Personenkraftwagen, damit beim Synchronisieren keine Überdrehzahlen im Getriebe auftreten. Bei Getrieben für Fahrzeuge, die für schnelle Rückwärtsfahrt ausgelegt sind, kann auch ein Rückwärtsgang zur Synchronisierung verwendet werden, sofern ein synchronisierter Rückwärtsgang vorhanden ist.

Weitere Ausgestaltungen und Vorteile der Erfindung ergeben sich aus der nachfolgenden Beschreibung eines bevorzugten Ausführungsbeispieles unter Bezugnahme auf die Zeichnungen. Darin zeigen:
- Fig. 1: schematisch den Aufbau eines automatisierten Handschaltgetriebes für das erfindungsgemässe Verfahren,
- Fig. 2: ein Blockschaltbild über die Systemreaktion auf den Fahrerwunsch,
- Fig. 3: ein Blockschaltbild über die interne Verfolgung der Fahrtrollrichtung des Systems, und
- Fig. 4: ein Blockschaltbild über ein erfindungsgemässes Verfahren zur Bestimmung der Rollrichtung.

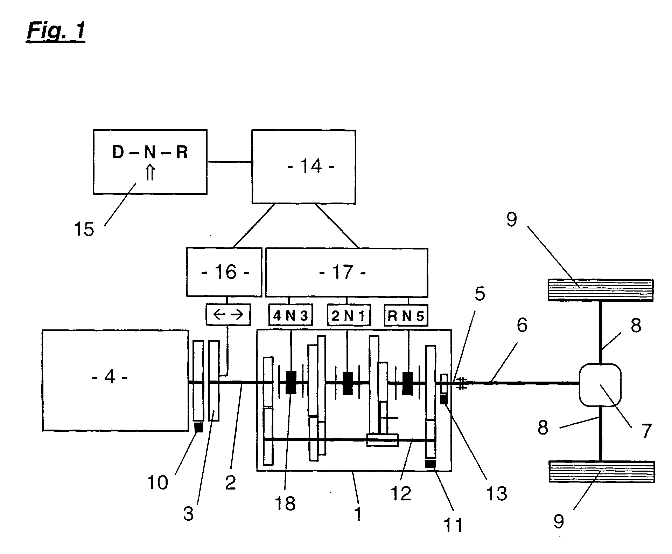

Der schematische Aufbau eines automatisierten Handschaltgetriebes ist in Fig. 1 dargestellt. Die eigentliche Kraftübertragung erfolgt in einem konventionellen Handschaltgetriebe 1, das über die Getriebeeingangswelle 2 und über die Kupplung 3 mit dem Motor 4 verbunden ist. Abtriebsseitig treibt die Getriebeausgangswelle 5 über die Antriebswelle 6, das Differentialgetriebe 7 und die Seitenwellen 8 die Räder 9 an. Die Drehzahl des Motors 4 wird mittels eines Motordrehzahlsensors 10 erfasst. Die Drehzahl der Getriebeeingangswelle 2 wird mittels eines Eingangsdrehzahlsensors 11 gemessen, der hier an der Vorgelegewelle 12 angebracht ist. Die Drehzahl der Getriebeausgangswelle 5 wird mittels eines Ausgangsdrehzahlsensors 13 erfasst. Gesteuert wird das Handschaltgetriebe 1 über die zentrale Steuereinheit 14. Über die Fahrbereichswähleinrichtung 15 erhält sie die Vorgabe der Fahrstufen Vorwärts, Neutral und Rückwärts. Die Drehzahlinformation von Motordrehzahlsensor 10, Eingangsdrehzahlsensor 11 und Ausgangsdrehzahlsensor 13 werden ebenfalls in der Steuereinheit verarbeitet. Abhängig vom aktuellen Fahrzustand und der gewünschten Fahrstufe werden der Kupplungssteller 16 zur Betätigung der Kupplung 3 sowie die Gangschaltvorrichtung 17 zur Betätigung der Synchronisiereinrichtung 18 angesteuert.

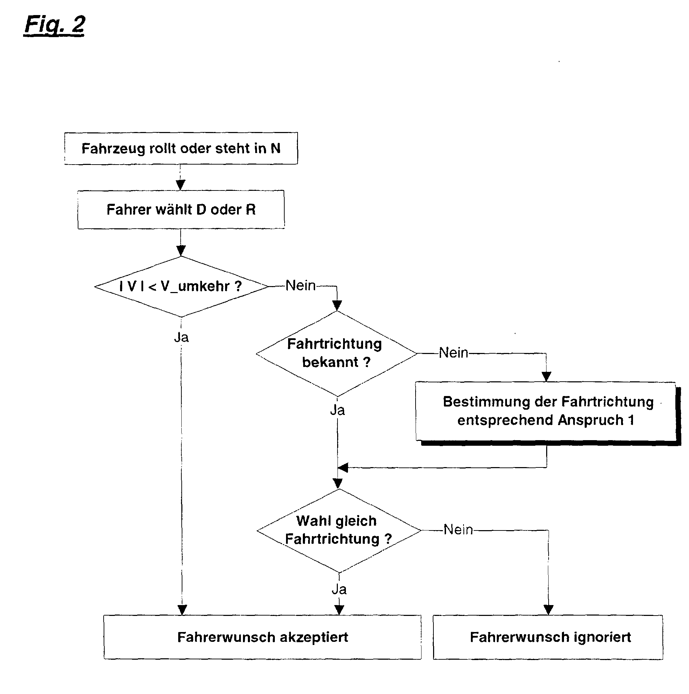

In Fig. 2 ist ein Blockschaltbild über die Systemreaktion auf einen Fahrerwunsch gezeigt. Ausgangspunkt ist, dass als Fahrstufe Neutral (N) gewählt ist, sich das Handschaltgetriebe 1 in Neutralstellung befindet, wobei das Fahrzeug rollen oder stehen kann. Wenn dann der Fahrer mittels der Fahrstufenwählvorrichtung 15 die Fahrstufe Vorwärts (D) oder Rückwärts (R) wählt, überprüft die Steuereinheit, ob der Betrag der aktuellen Fahrgeschwindigkeit (IVI), der sich aus der Ausgangsdrehzahl des Ausgangsdrehzahlsensors 13 ergibt, kleiner einer Umkehrgeschwindigkeit (V-umkehr) ist. Wenn ja, wird der Fahrerwunsch akzeptiert und mittels der Gangschaltvorrichtung 17 ein entsprechender Gang eingelegt.

Ist die aktuelle Fahrgeschwindigkeit grösser als die Umkehrgeschwindigkeit, wird überprüft, ob die Fahrtrichtung bekannt ist. Die Fahrtrichtung ist als Fahrtrichtungsmodus "vorwärts", "rückwärts" oder "unbekannt" in der Steuereinheit 14 gespeichert. Wenn der Fahrtrichtungsmodus "unbekannt" ist, wird die Fahrtrichtung mittels des erfindungsgemässen Verfahrens nach Anspruch 1 ermittelt. Der jetzt vorliegende Fahrtrichtungsmodus "vorwärts" oder "rückwärts" wird dann mit der Auswahl der Fahrstufe verglichen. Wenn beide übereinstimmen, wird der Fahrerwunsch akzeptiert, andernfalls wird der Fahrerwunsch ignoriert.

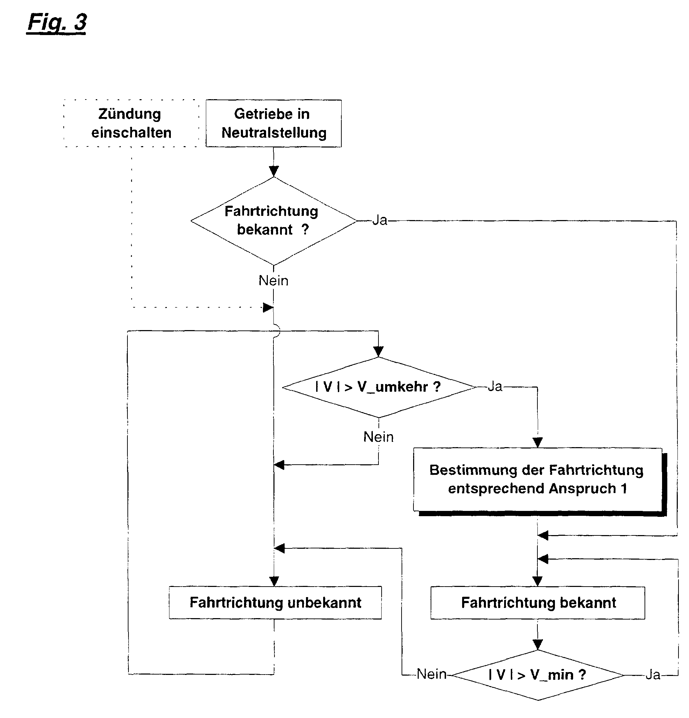

Das Blockschaltbild in Fig. 3 zeigt den internen Programmablauf in der Steuereinheit 14 zur Verfolgung der Fahrtrichtung. Dieses Programm läuft automatisch ab, sobald sich das Handschaltgetriebe 1 in Neutral befindet. Erste Abfrage ist, ob die Fahrtrichtung bekannt ist. Wenn nein - dies gilt auch, wenn die Zündung eingeschaltet wird -, ist der Fahrtrichtungsmodus "unbekannt". In diesem Fall wird laufend überprüft, ob die aktuelle Fahrtgeschwindigkeit grösser der Umkehrgeschwindigkeit ist (V-umkehr). Wenn nein, bleibt der Fahrtrichtungsmodus "unbekannt". Wenn ja, wird die Fahrtrichtung bestimmt entsprechend dem erfindungsgemässen Verfahren nach Anspruch 1. Der Fahrtrichtungsmodus ist dann "vorwärts" oder "rückwärts" und damit bekannt.

Daraufhin findet eine ständige Überprüfung statt, ob die aktuelle Fahrgeschwindigkeit größer der meßbaren Mindestgeschwindigkeit ist. Wenn dies ständig der Fall ist, bleibt der Fahrtrichtungsmodus bekannt. Wenn nein, d.h. die aktuelle Fahrgeschwindigkeit wird zu einem beliebigen Zeitpunkt kleiner als die Mindestgeschwindigkeit, ändert sich der Fahrtrichtungsmodus zu "unbekannt". Der Fahrtrichtungsmodus bleibt dann so lange unbekannt, bis die aktuelle Fahrgeschwindigkeit die Umkehrgeschwindigkeit überschreitet und eine erneute Bestimmung der Rollrichtung vorgenommen wird.

Wenn aus einer Fahrstufe in Getriebeneutralstellung geschaltet wird und dadurch der Fahrtrichtungsmodus bekannt ist, wird vom Programm überprüft, ob die aktuelle Fahrgeschwindigkeit grösser der meßbaren Mindestgeschwindigkeit ist. Wenn ja, bleibt die Fahrtrichtung bekannt, wenn nein, ändert sich der Fahrtrichtungsmodus zu "unbekannt".

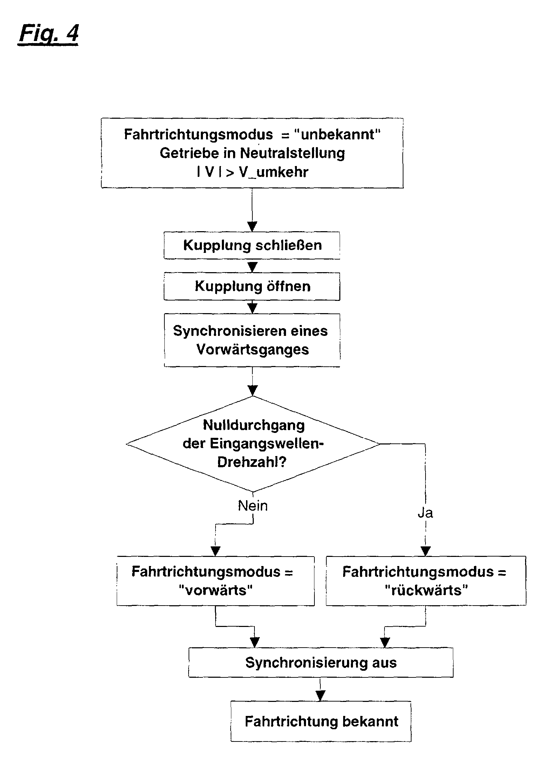

In Fig. 4 ist ein Blockschaltbild mit dem erfindungsgemässen Verfahren zur Bestimmung der Fahrtrichtung dargestellt. Das Verfahren wird immer dann ausgeführt, wenn, wie in Fig. 2 und Fig. 3 gezeigt, folgende Bedingungen vorliegen: Das Handschaltgetriebe 1 befindet sich in Neutralstellung, der Fahrtrichtungsmodus ist "unbekannt" und die Fahrgeschwindigkeit ist grösser als die Umkehrgeschwindigkeit. Dann wird durch Schliessen der Kupplung die Getriebeeingangswelle etwa auf Motordrehzahl beschleunigt. Danach wird die Kupplung wieder geöffnet und die Getriebeeingangswelle dreht sich durch die eigene Massenträgheit in Motordrehrichtung weiter. Durch das Synchronisieren eines Vorwärtsganges wird die Drehung der Getriebeausgangswelle 5 auf die Getriebeeingangswelle 2 übertragen. Mittels des Eingangsdrehzahlsensors 11 wird dabei der Drehzahlverlauf der Getriebeeingangswelle 2 untersucht. Stabilisiert sich die Eingangsdrehzahl innerhalb eines Drehzahlfensters ohne Null-Durchgang, so liegt die gleiche Drehrichtung vor und die Fahrtrichtung ist vorwärts. Dann wird der Fahrtrichtungsmodus in der Steuereinheit 14 zu "vorwärts" gesetzt.

Wenn beim Synchronisieren ein Null-Druchgang der Eingangsdrehzahl stattfindet, was sich darin zeigt, dass die Drehzahl sich nicht innerhalb eines bestimmten Fensters stabilisiert, liegt die entgegengesetzte Drehrichtung vor und die Fahrtrichtung ist rückwärts. In diesem Fall wird der Fahrtrichtungsmodus in der Steuereinheit 14 zu "rückwärts" gesetzt.

Wenn der Fahrtrichtungsmodus bestimmt und die Fahrtrichtung damit bekannt ist, wird die Synchronisierung des Ganges rückgängig gemacht.

## Patentansprüche

1. Verfahren zur Bestimmung der Fahrtrichtung in Getriebeneutralstellung für ein automatisiertes Handschaltgetriebe (1) in einem Kraftfahrzeug, wobei das Handschaltgetriebe (1) mehrere Vorwärtsgänge und mindestens einen Rückwärtsgang sowie Sensoren zur Messung von Eingangs- und Ausgangsdrehzahl aufweist, die Sensoren mit einer zentralen Steuereinheit (14) verbunden sind, mittels welcher ein Kupplungssteller (16) und eine Gangschaltvorrichtung ansteuert werden, eine Fahrstufenwählvorrichtung (15) zur manuellen Vorgabe der Fahrstufen Vorwärts, Neutral und Rückwärts ebenfalls auf die Steuereinheit (14) wirkt,
**dadurch gekennzeichnet, daß** folgende Verfahrensschritte ausgeführt werden:
- die Kupplung (4) wird kurz geschlossen und wieder geöffnet, wodurch die Getriebeeingangswelle (2) in Motordrehrichtung dreht und etwa auf die Motordrehzahl beschleunigt;
- anschließend wird ein Vorwärtsgang synchronisiert, wodurch die Getriebeeingangswelle (2) etwa auf eine Drehzahl, die sich aus dem entsprechenden Übersetzungsverhältnis des synchronisierten Ganges und der Ausgangsdrehzahl ergibt, beschleunigt und die sich ergebende Drehrichtung bei Vorwärtsfahrt gleich und bei Rückwärtsfahrt entgegengesetzt der Motordrehrichtung ist;
- während des Synchronisierens wird der Drehzahlverlauf der Getriebeeingangswelle dahingehend untersucht, ob ein Nulldurchgang stattfindet, wenn nein, ist die Fahrtrichtung vorwärts, wenn ja, ist die Fahrtrichtung rückwärts.

2. Verfahren nach Anspruch 1,
**dadurch gekennzeichnet, daß**
die ermittelte Fahrtrichtung in der Steuereinheit (14) als Fahrtrichtungsmodus "vorwärts" oder "rückwärts" gespeichert wird, wobei ein zusätzlicher Fahrtrichtungsmodus "unbekannt" gespeichert werden kann.

3. Verfahren nach Anspruch 2,
**dadurch gekennzeichnet, daß**
wenn der Fahrtrichtungsmodus "unbekannt" ist, die Bestimmung der Fahrtrichtung zum Zeitpunkt einer manuellen Schaltauswahl der Fahrstufe Vorwärts oder Rückwärts erfolgt.

4. Verfahren nach Anspruch 2,
**dadurch gekennzeichnet, daß**
wenn der Fahrtrichtungsmodus "unbekannt" ist, die Bestimmung der Fahrtrichtung zum Zeitpunkt des Überschreitens einer Umkehrdrehzahl der Getriebeausgangswelle erfolgt.

5. Verfahren nach Anspruch 1,
**dadurch gekennzeichnet, daß**
statt eines Vorwärtsganges ein Rückwärtsgang zur Synchronisierung verwendet wird.

## Claims

1. Method for determining the driving direction in the neutral position of the transmission for an automated manual-shift transmission (1) in a motor vehicle, the manual-shift transmission (1) having a plurality of forward gears and at least one reverse gear and also sensors for the measurement of the input and the output rotational speed, said sensors being connected to a central control unit (14), by means of which a clutch plate (16) and a gear-shift device are activated, a drive-position selection device (15) for the manual presetting of the forward, neutral and reverse drive positions likewise acting on a control unit (14),
**characterized in that** the following method steps are carried out:-
- the clutch (4) is briefly closed and opened again, with the result that the transmission input shaft (2) rotates in the engine rotation direction and accelerates approximately to the engine rotational speed;
- subsequently, a forward gear is synchronised, with the result that the transmission input shaft (2) accelerates approximately to a rotational speed arising from the corresponding transmission ratio of the synchronised gear and the initial rotational speed, and the resulting rotation direction is the same as the engine rotation direction in forward drive and is opposite to the engine rotation direction in reverse drive;
- during synchronisation, the rotational-speed profile as the transmission input shaft is examined as to whether zero passage takes place, and, if not, the driving direction is forwards and, if so, the driving direction is in reverse.

2. Method according to Claim 1, **characterized in that** the driving direction determined is stored in the control unit (14) as a driving-direction mode "forward" or "reverse", and an additional driving-direction mode "unknown" can be stored.

3. Method according to Claim 2, **characterized in that**, when the driving-direction mode is "unknown", the determination of the driving direction takes place at the time of a manual shift selection of the forward or reverse drive position.

4. Method according to Claim 2, **characterized in that**, when the driving-direction mode is "unknown", the determination of the driving direction takes place at the time when a reverse rotational speed of the transmission output shaft is exceeded.

5. Method according to Claim 1, **characterized in that** a reverse gear is used for synchronisation instead of a forward gear.

## Revendications

1. Procédé pour déterminer le sens d'avance en position neutre de la transmission pour une transmission manuelle automatisée (1) dans un véhicule automobile, où la transmission manuelle (1) présente plusieurs rapports de marche avant et au moins un rapport de marche arrière ainsi que des capteurs pour mesurer la vitesse de rotation d'entrée et de sortie, les capteurs étant connectés à une unité de commande centrale (14), au moyen de laquelle un dispositif de commande d'embrayage (16) et un dispositif de sélection de vitesse sont commandés, un dispositif de sélection de rapports de marche (15) pour prédéfinir manuellement les rapports de marche avant, neutre et arrière agissant également sur l'unité de commande (14),
**caractérisé en ce que** les étapes de procédé suivantes sont réalisées :
- l'embrayage (4) est fermé brièvement et à nouveau ouvert, l'arbre d'entrée de la transmission (2) tournant dans le sens de rotation du moteur et accélérant approximativement jusqu'à la vitesse de rotation du moteur ;
- ensuite une vitesse avant est synchronisée, l'arbre d'entrée de la transmission (2) accélérant approximativement à une vitesse de rotation qui résulte du rapport de transmission correspondant de la vitesse synchronisée et de la vitesse de rotation de sortie, et le sens de rotation en résultant lors de la marche avant étant égal, et lors de la marche arrière étant opposé, au sens de rotation du moteur ;
- pendant la synchronisation, l'allure de la vitesse de rotation de l'arbre d'entrée de la transmission recherche par contre si un passage à zéro a lieu, si ce n'est pas le cas, le sens de la marche est vers l'avant, si c'est le cas, le sens de la marche est vers l'arrière.

2. Procédé selon la revendication 1, **caractérisé en ce que** le sens de la marche détecté dans l'unité de commande (14) est mémorisé comme mode de sens de marche "avant" ou "arrière", un mode de sens de marche supplémentaire "inconnu" pouvant être mémorisé.

3. Procédé selon la revendication 2, **caractérisé en ce que**, lorsque le mode de sens de marche est "inconnu", la détermination du sens de marche jusqu'à l'instant d'une sélection manuelle du rapport de marche s'effectue vers l'avant ou vers l'arrière.

4. Procédé selon la revendication 2, **caractérisé en ce que**, lorsque le mode de sens de marche est "inconnu", la détermination du sens de marche s'effectue jusqu'à l'instant du dépassement d'une vitesse de rotation inverse de l'arbre de sortie de la transmission.

5. Procédé selon la revendication 1, **caractérisé en ce qu'**on utilise au lieu d'une vitesse avant, une vitesse arrière pour la synchronisation.
